Europäisches Patentamt

European Patent Office

Office européen des brevets

(11) Veröffentlichungsnummer : **0 131 880**
**B1**

(12) **EUROPÄISCHE PATENTSCHRIFT**

(45) Veröffentlichungstag der Patentschrift :
17.05.89

(51) Int. Cl.⁴ : **H 04 N   5/33**, H 04 N   3/15,
G 11 C  19/28

(21) Anmeldenummer : 84107969.2

(22) Anmeldetag : 07.07.84

(54) **Verfahren zur Übergabe der von mindestens zwei benachbarten IR-Detektoren erzeugten Ladungsmengen an ein CCD-Schieberegister.**

(30) Priorität : 16.07.83 DE 3325764

(43) Veröffentlichungstag der Anmeldung :
23.01.85 Patentblatt 85/04

(45) Bekanntmachung des Hinweises auf die Patenterteilung : 17.05.89 Patentblatt 89/20

(84) Benannte Vertragsstaaten :
DE FR GB IT NL

(56) Entgegenhaltungen :
EP--A-- 0 066 020
IEEE TRANSACTIONS ON ELECTRON DEVICES,
Band DE-19, Nr. 6, Juni 1972, Seiten 798-808; J.E.
CARNES et al.: "Free charge transfer in charge-
coupled devices"
PATENT ABSTRACTS OF JAPAN, Band 6, Nr. 203 (P-
148)[1081], 14. Oktober 1982 & JP-A-57 109 193
PATENT ABSTRACTS OF JAPAN, Band 5, Nr. 181 (E-
83)[853], 20. November 1981 & JP-A-56 109 076
PATENT ABSTRACTS OF JAPAN, Band 6, Nr. 137 (P-
130)[1015], 24. Juli 1982 & JP-A-57 60 592

(73) Patentinhaber : Licentia Patent-Verwaltungs-GmbH
Theodor-Stern-Kai 1
D-6000 Frankfurt/Main 70 (DE)

(72) Erfinder : Kohlbacher, Gerhard, Dipl.-Ing.
Im Grund 3
D-7900 Ulm 10 (DE)
Erfinder : Nothaft, Peter, Dr.
Neu-Ulmer-Strasse 16
D-7910 Neu-Ulm/Reutti (DE)

(74) Vertreter : Schulze, Harald Rudolf, Dipl.-Ing. et al
Licentia Patent-Verwaltungs-GmbH Theodor-Stern-
Kai 1
D-6000 Frankfurt/Main 70 (DE)

**Beschreibung**

Die Erfindung betrifft ein Verfahren der im Oberbegriff des Patentanspruchs 1 genannten Art.

Neuzeitliche Wärmebild-Geräte besitzen zur Verbesserung der Empfindlichkeit eine Vielzahl von Einzeldetektoren in der Fokusebene der IR-Optik. Die Forderung nach einer hohen geometrischen Bildauflösung bedingt eine dichte, im allgemeinen zweidimensionale Packung der Detektorelemente. Da die IR-Detektoren eine Betriebstemperatur von typisch $40\,K < T < 100\,K$ erfordern, sind die ein- oder zweidimensionalen Detektorarrays in ein Dewargehäuse einzubauen.

Bei zweidimensionalen Multielementarrays ist dabei eine individuelle Herausführung der Signalleitungen von jedem Detektorelement zum zugehörigen Vorverstärker äußerst schwierig. Ein relativ einfaches Detektorsignal-Ausleseverfahren bieten die ladungsgekoppelten Bauelemente, auch CCD-Schieberegister genannt. CCD-Schieberegister wandeln die Vielzahl der räumlich verteilten Detektorsignale um in ein Zeit-Multiplex-Signal.

Häufig erfordern die in den Detektoren erzeugten Ladungsträger für eine vom Gesamtsystem vorgegebene Integrationszeit ein großes Fassungsvermögen der die Ladungen transferierenden Stufen und damit große Elektrodenflächen der CCD-Schieberegister. Andererseits ist sowohl bei monolithischen als auch bei hybriden Detektorarrays die Halbleiterchipfläche für die Signalverarbeitung bereits durch die von der IR-Optik vorgegebene Anordnung der IR-Detektoren bestimmt.

Übliche CCD-Schieberegisterstufen transferieren eine Ladung in vier Taktphasen mittels vier auf dem Halbleiterchip angeordneten Elektroden. Bei einem Detektorabstand von 100 µm und einer einzigen CCD-Stufe pro Detektor ergibt sich damit eine mittlere Elektrodenlänge L (in Richtung des Ladungstransfers gemessen) von etwa 25 µm. Die Dauer für den Ladungstransfer zwischen zwei Elektroden ist proportional dem Quadrat der Elektrodenlänge L. Bei $L = 25$ µm wird ein CCD-Schieberegister für die meisten Anforderungen zu langsam, das bedeutet, daß in einer vorgegebenen Taktperiode nicht mehr die gesamte Ladung transferiert wird, so daß es zu Ladungsverlusten und damit zu einer Verzerrung des Nutzsignals kommt.

Aus der Literatur (z. B. IEEE, Trans. Electr. Devices, ED-19, Juni 1972, Seiten 798-808) ist es bekannt, zur Erhöhung der Transfergeschwindigkeit zwischen den den IR-Detektoren zugeordneten CCD-Stufen jeweils n-1 zusätzliche CCD-Schieberegisterstufen vorzusehen (n steht für eine ganze Zahl, die > 1, also z. B. 3 ist). Mit zwei zusätzlichen CCD-Schieberegisterstufen entfallen damit auf eine Länge von 100 µm 12 Elektroden, so daß sich damit eine mittlere Elektrodenlänge L' von 8 1/3 µm ergibt. Dadurch ist eine 9-mal so große Transfergeschwindigkeit möglich. Nachteilig an diesem Verfahren ist, daß die beiden zusätzlichen Schieberegisterstufen im gewählten Beispiel nicht genutzt werden.

Der Erfindung liegt daher die Aufgabe zugrunde, den Stand der Technik zu verbessern. Insbesondere soll der Signal/-Rausch-Abstand der Nutzsignale verbessert werden.

Die Aufgabe wird bei einem Verfahren der eingangs genannten Art durch die im kennzeichnenden Teil des Anspruchs 1 angegebene Erfindung gelöst.

Dadurch, daß die in einem Integrationsintervall in einem IR-Detektor anfallende Gesamtladung auf die üblicherweise für die Ladungsübergabe nicht benutzten CCD-Schieberegisterstufen eingelesen werden, ist die auf eine Elektrodenfläche entfallende Ladung wesentlich kleiner und die Elektrodenfläche wird besser zur Ladungsspeicherung genutzt. So kann insbesondere die Elektrodenweite (gemessen senkrecht zur Transferrichtung) kleiner als ohne die erfindungsgemäße Maßnahme dimensioniert werden. Die Aufteilung der Gesamtladung eines IR-Detektors in mehrere Teilladungen hat außerdem den Vorteil, daß sich die Gesamtladung zu $Q = n \cdot q$ summiert. Die in den einzelnen CCD-Stufen entstehenden Rauschanteile r werden aber nur gemäß der Gleichung $R = r \cdot \sqrt{n}$ summiert. Der Signal/Rausch-Abstand verbessert sich folglich durch das erfindungsgemäße Verfahren um den Faktor $\sqrt{n}$.

Die Erfindung wird nun anhand eines Ausführungsbeispiels näher erläutert.

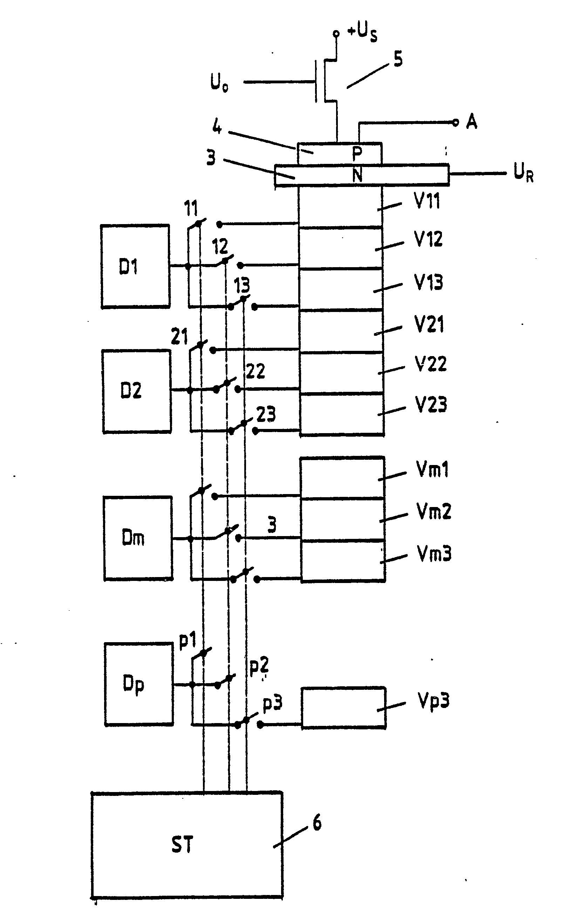

Die Figur zeigt eine Übergabeschaltung gemäß der Erfindung. In der Figur sind mit D1, D2,...Dm,... bis Dp insgesamt p IR-Detektoren bezeichnet, die über jeweils $n = 3$ Schalter ihre Ladungen an ein mit V11 bis Vp3 bezeichnete Stufen eines Schieberegisters abgeben können.

Die den 3 Schaltern zugeordneten Schieberegisterstufen sind z. B. für den Detektor D1 mit V11, V12 und V13 bezeichnet und die die Verbindung zwischen dem Detektor D1 und den genannten Schieberegisterstufen vorgesehenen Schalter tragen die Bezeichnungen 11, 12 und 13.

Jede Schieberegisterstufe weist 4, auf einem allen Stufen und Schaltern gemeinsamen Halbleiterchip angeordnete Elektroden auf, die im Fall der Schieberegisterstufe V11 in der Figur durch waagrechte Streifen angedeutet sind. Der Ladungstransfer durch eine einzelne Schieberegisterstufe erfordert, wie bereits eingangs erwähnt, 4 Taktphasen.

Zwischen den den Infrarot-Detektoren zugeordneten Schieberegisterstufen V13, V23, V33,...Vm3 bis Vp3 sind im Ausführungsbeispiel jeweils $n - 1 = 2$ zusätzliche Schieberegisterstufen zur Erhöhung der Transfergeschwindigkeit vorgesehen.

Gemäß der Erfindung wird nun die Gesamtladung eines IR-Detektors, z. B. die des Detektors D1, innerhalb der jeweiligen Integrationszeit auf n = 3 Teilladungen aufgeteilt und die Teilladungen sowohl in die dem jeweiligen Detektor zugeordnete Schieberegisterstufe, z. B. V13, als auch in die (n—1) = 2 zusätzlichen Schieberegisterstufen V12 und V11 eingelesen.

Am Ende der Schieberegisterstufen, an der Elektrode 3, welche auf einer Referenzspannung $U_R$ gehalten wird, werden in der durch die aus der Sperrschicht einer Diode 3, 4 gebildete Ausleseschaltung mit Feldeffekttransistor 5 jeweils die n = 3 Teilladungen eines IR-Detektors wieder zur Gesamtladung addiert und weiterverarbeitet.

Zur Steuerung der Schalter 11 bis p3 dient eine Steuerung 6, die auch die Schieberegisterstufen V11 bis Vp3 und die sonstigen in der Figur nicht dargestellten Bauteile des Halbleiterchips steuert. Während der Belichtung der IR-Detektoren D1 bis Dp, die beispielsweise einer Bildzeile zugeordnet sein können, werden zunächst alle Schalter 11 bis p1 geschlossen, wodurch die Ladungen der jeweiligen IR-Detektoren auf die Schieberegisterstufen V11 bis Vp3 geleitet werden. Anschließend werden die Schalter 11 bis p1 geöffnet und die Schalter 12 bis p2 geschlossen und dadurch die Schieberegisterstufen V12 bis Vp2 mit Ladungen der gleichen Detektoren versehen. Im letzten Teil des beispielsweise aus n + 2 = 4 Takten bestehenden Zyklus werden dann die Schalter 12 bis p2 wieder geöffnet und die Schalter 13 bis p3 geschlossen und somit die restlichen Stufen V13 bis Vp3 geladen. Im 4. Takt werden alle Schalter 11 bis p3 geöffnet und die Ladungen in einem schnellen Takt über die Schieberegisterstufen zur Ausleseschaltung 3, 4, 5 transferiert und von dort beispielsweise über weitere Schieberegister zur Auswerteschaltung transferiert. Danach beginnt der Vorgang wieder von vorne mit der erneuten Schließung der Schalter 11 bis p1 und sof. Als Schalter 11 bis p3 werden vorzugsweise Transistoren verwendet.

Bei einer anderen Ausgestaltung der Erfindung werden die Teilladungen dem CCD-Schieberegister gleichzeitig übergeben. Hierzu sind jedem IR-Detektor 3 über gleich große Verzögerungsleitungen erreichbare Kapazitäten zugeordnet, die jeweils über einen Schalter mit den n, dem Detektor zugeordneten Schieberegisterstufen verbunden sind und von der Steuerung jeweils am Ende der Integrationszeit gleichzeitig getätigt werden. Auch bei diesem Ausführungsbeispiel werden zunächst alle V11 bis Vp3 Schieberegisterstufen geladen und anschließend ihre Ladung zur Ausleseschaltung transferiert, wobei jeweils die 3 Teilladungen eines Detektors in der Ausleseschaltung wieder zusammengefaßt werden.

**Patentansprüche**

1. Verfahren zur Übergabe der von mindestens zwei benachbarten IR-Detektoren erzeugten Ladungsmengen an ein CCD-Schieberegister, bei dem zwischen den den IR-Detektoren zugeordneten CCD-Schieberegisterstufen jeweils n — 1 (n = ganze Zahl > 1) zusätzliche CCD-Schieberegisterstufen zur Erhöhung der Transfergeschwindigkeit vorgesehen sind, dadurch gekennzeichnet, daß die Gesamtladungsmenge eines IR-Detektors (Dm, wobei m = 1, 2, 3,...p) innerhalb der Integrationszeit auf n (z. B. n = 3) Teilladungen aufgeteilt wird und die Teilladungen sowohl in die dem IR-Detektor zugeordnete CCD-Schieberegisterstufe als auch in die (n—1) zusätzlichen CCD-Schieberegisterstufen eingelesen werden und daß am Ende des CCD-Schieberegisters in der Ausleseschaltung (3, 4, 5) jeweils die n Teilladungen eines IR-Detektors wieder zur Gesamtladung addiert werden.

2. Verfahren nach Anspruch 1, dadurch gekennzeichnet, daß die Teilladungen dem CCD-Schieberegister nacheinander übergeben werden.

3. Verfahren nach Anspruch 1, dadurch gekennzeichnet, daß die Teilladungen dem CCD-Schieberegister gleichzeitig übergeben werden.

**Claims**

1. Method for the transfer of the charge quantities produced by at least two adjacent infra-red detectors to a charge-coupled device shift register, in which for an increase in the transfer speed n — 1 (n = whole number greater than 1) additional charge-coupled device shift register stages are provided each time between the charge-coupled device shift register stages associated with the infra-red detectors, characterised thereby, that the total charge quantity of an infra-red detector (Dm, wherein m = 1, 2, 3,...p) is divided up within the integration time over n (for example n = 3) partial charges and the partial charges are entered into the charge-coupled device shift register stage associated with the infrared detector as well as also into the (n — 1) additional charge-coupled device shift register stages and that the n partial charges of an infra-red detector are each time again added up to the total charge in the read-out circuit (3, 4, 5) at the end of the charge-coupled device shift register.

2. Method according to claim 1, characterised thereby, that the partial charges are transferred one after the other to the charge-coupled device shift register.

3. Method according to claim 1, characterised thereby, that the partial charges are transferred simultaneously to the charge-coupled device shift register.

**Revendications**

1. Procédé pour transférer des quantités de charges fournies par au moins deux détecteurs infrarouges voisins à un registre à décalage à couplage de charges, dans lequel, entre les étages, correspondant aux détecteurs infrarouges, du registre à décalage à couplage de charges, sont respectivement prévus, pour augmenter la vitesse de transfert, n — 1 (n = nombre entier supérieur à 1) étages supplémentaires du registre à décalage à couplage de charges, caractérisé en ce que la quantité de charge totale d'un détecteur infrarouge ($D_m$ avec $m = 1, 2, 3,...p$) est répartie. Pendant la période d'intégration, en n (par exemple $n = 3$) charges partielles ; en ce que les charges partielles sont mémorisées aussi bien dans l'étage, correspondant au détecteur infrarouge, du registre à décalage à couplage de charges, que dans les $(n - 1)$ étages supplémentaires du registre à décalage à couplage de charges ; et en ce qu'à l'extrémité du registre à décalage à couplage de charges, dans les circuits de lecture (3, 4, 5) les n charges partielles d'un détecteur infrarouge sont respectivement additionnées pour donner à nouveau la charge totale.

2. Procédé selon la revendication 1, caractérisé en ce que les charges partielles sont transmises au registre à décalage à couplage de charges successivement.

3. Procédé selon la revendication 1, caractérisé en ce que les charges partielles sont transmises au registre à décalage à couplage de charges simultanément.